# EUROPÄISCHE PATENTANMELDUNG

(11) **EP 0 717 459 A1**
(43) Veröffentlichungstag der Anmeldung: **19.06.1996**
(21) Anmeldenummer: 95117668.4
(22) Anmeldetag: 09.11.1995
(51) Int. Cl.: H01Q 1/12, H01Q 15/00

(54) **Metallisierte Glasscheibe**

(30) Priorität: 08.12.1994 DE 4443708; 09.03.1995 DE 19508307
(71) Anmelder: ROBERT BOSCH GMBH, 70442 Stuttgart (DE)
(72) Erfinder: Gehrke, Michael, D-31162 Bad Salzdetfurth (DE); Jelinek, Egbert, D-31157 Sarstedt (DE); Koertje, Frank, D-31191 Algermissen (DE); Ohler, Michael, D-31035 Despetal (DE)

(57) **Zusammenfassung**

Es wird eine Glasscheibe, insbesondere eine Verbundglasscheibe mit einer mit rasterförmigen Mustern versehenen Zwischenschicht aus Metall und ein Verfahren zum nachträglichen Versehen von Verbundglassystemen mit Mustern beschrieben.

## Beschreibung

Metallisierte Glasscheibe, insbesondere Verbundglasscheibe mit einer ein Muster aufweisenden Zwischenschicht aus Metall und Verfahren zu ihrer Herstellung
Gegenstand des Schutzrechts ist eine metallisierte Glasscheibe, insbesondere eine Verbundglasscheibe mit einer ein Muster aufweisenden Zwischenschicht aus Metall und ein Verfahren zum nachträglichen Versehen von Verbundglasscheiben, die eine Zwischenschicht aus Metall aufweisen, mit Mustern.

Die auf dem Markt befindlichen Verbundglasscheiben tragen eine Kennzeichnung, die in die Glasoberfläche eingeätzt ist. Der hierfür notwendige Arbeitsgang kann die Fertigung von Verbundglasscheiben dann erschweren, wenn eine individuelle Kennzeichnung der Verbundglasscheiben gewünscht ist.

Aus der EP 332 898 B1 ist es bekannt, während der Herstellung von Sichtscheiben für Fahrzeuge bei der Bedampfung des Trägers mit der Metallisierung Muster auszusparen, die als UKW-Antenne dienen. Auch hier ist das Versehen der Verbundglasscheibe mit einer UKW-Antenne in das Herstellungsverfahren eingebunden.

Wenn Verbundglasscheiben mit Zwischenschichten aus Metall als Front- oder Heckscheiben in Kraftfahrzeugen verwendet werden, verstärken diese noch die elektromagnetische Abschirmung des Fahrzeuginnenraums gegenüber Funkwellen. Dies ist von Nachteil, wenn in den Fahrzeugen Geräte zur Verkehrsleitung benützt werden, die von Sendern am Straßenrand Informationen übernehmen müssen.

Der Gegenstand der Erfindung unterscheidet sich vom Stand der Technik durch die kennzeichnenden Merkmale des Anspruchs 1.

Der Anspruch 2 kennzeichnet eine bevorzugte Ausbildung des Gegenstandes des Anspruchs 1.

Der Anspruch 4 hat ein Verfahren zur Herstellung von Verbundglassystemen zum Gegenstand, insbesondere solcher nach Anspruch 1 oder 2 und die folgenden abhängigen Ansprüche kennzeichnen Ausgestaltungen dieses Verfahrens.

Einzelheiten der Erfindung sind in der weiteren Beschreibung anhand der Zeichnung erläutert. Darin zeigen:
- Fig. 1: eine Verbundglasscheibe im Querschnitt
- Fig. 2: eine zweite Verbundglasscheibe im Querschnitt
- Fig. 3: eine Draufsicht auf eine erfindungsgemäße Verbundglasscheibe
- Fig. 4: eine Draufsicht auf eine erfindungsgemäße Verbundglasscheibe mit einer eingebetteten Scheibenantenne.

Die Erfindung betrifft alle einschichtige oder mehrschichtige Scheiben, auf die beispielsweise durch Aufdampfen eine nicht sichtbare oder sichtbare Metallschicht aufgebracht ist. Vorzugsweise kann die Metallschicht zwischen zwei übereinandergeklebte Glasplatten 1, 5 aufgebracht sein. Diese Lösung wird nachfolgend als Ausführungsbeispiel näher erläutert.

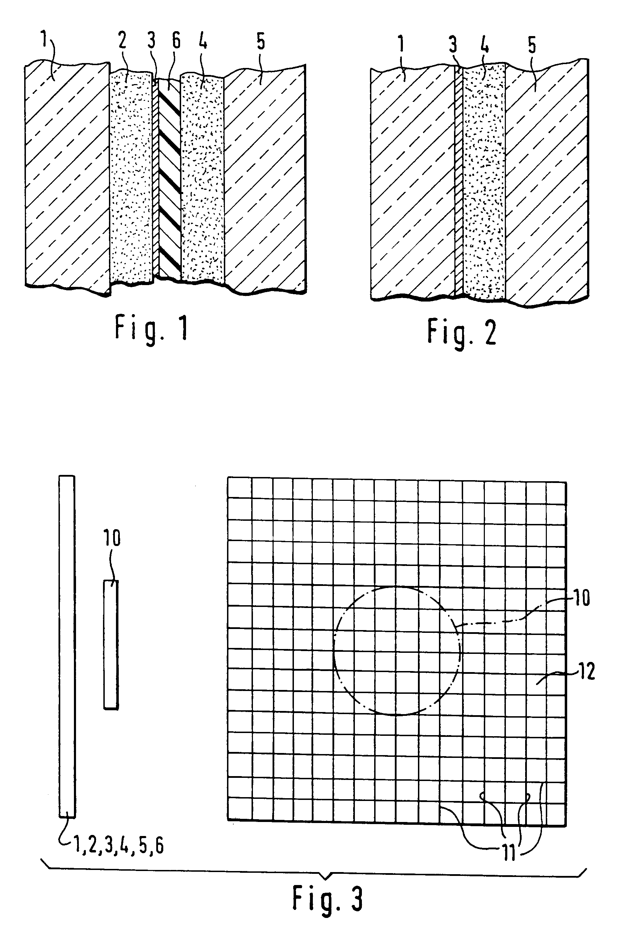

Ein typisches Verbundglassystem (Fig. 1) besteht aus einer ersten Glasplatte (1), einer ersten Kleberschicht (2), einer Metallschicht (3), einer Trägerschicht (6) für die Metallschicht, einer zweiten Kleberschicht (4) und einer zweiten Glasplatte (5). Die Darstellung ist nicht maßstabsgerecht.

Normalerweise haben die Glasplatten der aus Verbundglassystem bestehenden Front- und Heckscheiben von Kraftfahrzeugen (PKW) eine Stärke von ca. 1,5 - 3 mm und die Kleberschichten aus Polyvinylbuthyral (PVB) eine Stärke von ca. 0,4 - 0,8 mm. Die Metallfolie ist dagegen nur ca. 4 nm, die Trägerfolie 50 µm (0,05 mm) stark. Letztere besteht aus Polyethylenterephtalat (PET).

Bei anderen Systemen ist die innenliegende Oberfläche einer der Glasplatten selbst mit Metall bedampft. Dann wird nur eine Kleberschicht (4) benötigt (Fig. 2).

Zur nachträglichen Erzeugung der Muster wird ein Laserstrahl quer durch das Verbundglas geführt. Der Laserstrahl verursacht dementsprechende Schnitte in der Metallisierung. Dabei schmilzt die Metallisierung und die Schmelze zieht sich infolge ihrer Oberflächenspannung zu mikroskopisch kleinen Schmelzinseln in dem Schnitt zusammen, deren Lage von der Kleberstruktur mitbestimmt wird.

Bei Verbundglassystemen mit nur einer Kleberschicht wird der Laserstrahl zweckmäßigerweise über die Außenfläche der Glasplatte geführt, die auf ihrer Innenseite mit Metall bedampft ist.

Nach der Erzeugung des Musters mit dem Laserstrahl hat eine bevorzugte Ausführung einer für Mikrowellen transparenten Verbundglasscheibe das in Fig. 3 dargestellte Aussehen. Metallisierte Flächen 12 auf dem Material der Trägerschicht von quadratischer Struktur sind durch Laserschnitte 11 getrennt.

Die Laserschnitte haben eine verringerte elektrische Leitfähigkeit, so daß die nunmehr benachbarten Teilflächen der Metallisierung als voneinander isoliert anzusehen sind. Um diese Isolierung zu gewährleisten ist es ausreichend, wenn die Schnittbreite 0,05 bis 0,1 mm beträgt. Bei dieser Schnittbreite sind die Laserschnitte kaum vom Auge wahrzunehmen. Dies ist von Gewicht wenn die Tönung der Verbundglasscheibe, die durch die Metallisierung bewirkt wird, für das Auge ungestört bleiben soll.

Soll mit dem Laserstrahl eine Verbundglasscheibe mit einer Kennung als Muster versehen werden, dann kann demgegenüber eine größere Strahlbreite und/oder Mehrfachschnitte gewählt werden. Hierbei kann sich eine durch den Laserstrahl gegebenenfalls bewirkte Veränderung des Klebers für die Erkennbarkeit der Kennung vorteilhaft bemerkbar machen. Infolge des Schutzes der Metallisierung durch zwei Glasplatten erfordert die mutwillige Veränderung einer Kennung einerseits einen hohen technischen Aufwand und bleibt andererseits für jedermann erkennbar. Somit können solche Kennungen dem Wiederauffinden gestohlener Kraftfahrzeuge dienen, wenn man die Laserschnitte z. B. entsprechend einem Code mit wechselndem Abstand aufeinander folgen läßt. Auch die Anbringung von Klartext ist möglich.

Die weitgehende Vermeidbarkeit der Wahrnehmung des Laserschnitts geringer Breite mit dem Auge ermöglicht es, die einzelnen durch Laserschnitte voneinander getrennten Bereiche relativ klein zu wählen und die Oberfläche des Verbundglassystem in bestimmten Bereichen mit vielen Laserschnitten in Rasterform zu überziehen. Als Raster können parallelliegende Laserschnitte oder - wie in Fig. 3 dargestellt - auch senkrecht aufeinanderstehende Laserschnitte (11) gewählt werden. Wird der Abstand der Laserschnitte, d. h. der Rasterelemente klein im Vergleich zur halben Wellenlänge von Mikrowellen im unteren Gigahertz-Bereich gewählt, die in der Größenordnung von 2,5 cm liegt, dann kann die Durchlaßdämpfung für Funkwellen im Verbundglassystem um 15 dB und mehr abgesenkt werden, so daß sich deren Mikrowellentransparenz wesentlich verbessert und damit nur unwesentlich über dem Dämpfungsgrad normaler Scheiben liegt. Der Fahrzeuginnenraum wird somit hinter den Bereichen, die mit Laser bearbeitet wurden, nur unmerklich stärker abgeschirmt als bei der Verwendung ungetönter Scheiben.

Hinter einem Bereich mit besonders geringem Abstand der Laserschnitte ist, wie in Fig. 3 angedeutet ist, eine Planarantenne 10 für Mikrowellen angeordnet, deren Durchmesser so gewählt ist, daß sie einen Resonator für die Mikrowellen bildet. Die Form der Planarantenne 10 ist jedoch nicht auf die Kreisform beschränkt.

Die Möglichkeit nachträglich gegeneinander isolierte Bereiche in der Metallisierung des Verbundglassystems zu erzeugen erleichtert auch z. B. die Herstellung von elektrischen Schaltung nach Art gedruckter Schaltungen mit untereinander verbundenen Sensoren und Mikroprozessoren, wenn beide in ein Verbundglassystem integriert sind. Die diese Bauelemente verbindenden Leitungsbahnen lassen sich dann einfach aus der Metallisierung nachträglich herausschneiden, sodaß von der übrigen Metallisierung elektrisch getrennte Leitungszüge entstehen.

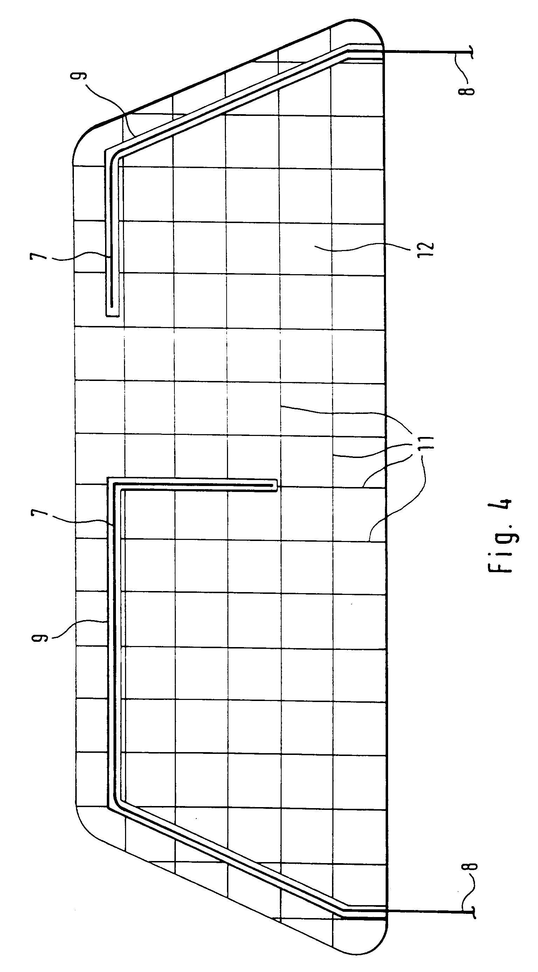

Verwendet man zum UKW-Empfang im Autoradio Antennen aus zwischen den Verbundglasscheiben 1, 5 eingelegten Drähten 7, - wie in Fig. 4 beispielsweise dargestellt ist - dann läßt sich die dämpfende Wirkung der Metallisierung noch vermindern, wenn man einen Laserschnitt in der Metallisierung umlaufend um den Draht herumführt.

Der Antennendraht 7 wird über den Anschluß 8 mit einenm nicht näher dargestellten Stecker verbunden. Bei entsprechender Breite des Laserstrahls bzw. bei Anwendung von Mehrfachschritten läßt sich der Antennendraht auf beiden Seiten in einer vorteilhaften Breite freischneiden.

Das zuvor beschriebene Verfahren ist ebenfalls an einschichtigen, metallisierten Scheiben anwendbar. Vorzugsweise wird ein Bereich der Scheibe metallisiert, der für eine individuelle Kennzeichnung, z. B. einem Firmenlogo, Barcode oder einer allgemeinen Beschriftung geeignet ist.
Hier lassen sich Code-Nummern für den Diebstahlschutz, elektrische Leitungen für Alarmanlagen, die einen Glasbruch melden oder für heizbare Scheiben mit dem Laser herstellen.

### Legende

- 1, 5: = Glasplatten
- 2, 4: = Kleberschichten
- 3: = Metallschicht
- 6: = Trägerschicht
- 7: = Antennendraht
- 8: = Anschluß
- 9: = Laserschnitt
- 10: = Planarantenne
- 11: = Laserschnitte
- 12: = isolierte, metallisierte Bereich

## Patentansprüche

1. Metallisierte Glasscheibe, insbesondere eine Verbundglasscheibe mit einer ein Muster aufweisenden Zwischenschicht aus Metall
dadurch gekennzeichnet,
daß das Muster in der Zwischenschicht (3) aus einem Raster (11) besteht, dessen Abstände klein gegenüber einer Funkwellenlänge sind.

2. Glasscheibe nach Anspruch 1,
dadurch gekennzeichnet,
daß die Abstände kleiner als 2,5 cm sind.

3. Glasscheibe nach Anspruch 2,
dadurch gekennzeichnet,
daß hinter dem Raster (11) eine Planarantenne (10) für Mikrowellenempfang angeordnet ist.

4. Verfahren zum nachträglichen Versehen von einer metallisierten Scheibe, insbesondere von Verbundglassystemen mit einer metallisierten Schicht bzw. Zwischenschicht mit Mustern,
dadurch gekennzeichnet,
daß das Muster mittels eines Laserstrahls in die zwischen zwei Glasplatten (1, 5) eingeschlossene Metallisierung (3) eingeschnitten wird.

5. Verfahren nach Anspruch 4,
dadurch gekennzeichnet,
daß die Metallisierung durch Laserschnitte (11) in isolierte, in einem Raster liegenden Teilflächen (12) zerlegt wird.

6. Verfahren nach Anspruch 4,
dadurch gekennzeichnet,
daß die Laserschnitte die Metallisierung in elektrisch getrennte Leitungszüge unterteilen.

7. Verfahren nach Anspruch 4, bei Verbundglasscheiben mit zwischen den Glasscheiben eingelegten Scheibenantennendrähten,
dadurch gekennzeichnet,
daß ein Laserschnitt umlaufend um den eingebetteten Antennendraht (7) geführt wird.

8. Verfahren nach Anspruch 4,
dadurch gekennzeichnet,
daß die Schnittbreite des Laserstrahls derart gewählt ist, daß optisch erfaßbare Laserschnitte entstehen.

9. Verfahren nach Anspruch 8,
dadurch gekennzeichnet,
daß die Laserschnitte entsprechend einem Code mit wechselndem Abstand aufeinander folgen.

10. Verfahren nach Anspruch 8,
dadurch gekennzeichnet,
daß die Laserschnitte entsprechend einem Code mit wechselnder Schnittbreite aufeinander folgen.
